# EUROPÄISCHE PATENTANMELDUNG

(11) **EP 2 353 754 A1**
(43) Veröffentlichungstag der Anmeldung: **10.08.2011**
(21) Anmeldenummer: 10014271.0
(22) Anmeldetag: 03.11.2010
(51) Int. Cl.: B23B 5/16

(54) **Schälgerät**

(30) Priorität: 05.02.2010 DE 102010006990
(71) Anmelder: PF Schweisstechnologie GmbH, 36304 Alsfeld (DE)
(72) Erfinder: Merle, Bernd, 36304 Alsfeld (DE); Spychalski-Merle, Achim, 36304 Alsfeld (DE)
(74) Vertreter: Eisenführ, Speiser & Partner

(57) **Zusammenfassung**

Die vorliegende Erfindung betrifft ein Schälgerät zum zumindest teilweisen Abtragen der Außenumfangsoberfläche von rotationssymmetrischen Gegenständen, insbesondere zylindrischen Kunststoffrohren, enthaltend ein glockenförmiges Gehäuse (10) mit einer Mittellängsachse (M) das eine zur Mittellängsachse (M) koaxial ausgerichtete und an einer Stirnseite des glockenförmigen Gehäuses (10) über eine Zuführöffnung nach außen hin offene Schälausnehmung (12) aufweist. In dem Gehäuse (10) ist eine Klinge (40) angeordnet, die mit ihrer vorzugsweise parallel zur Mittellängsachse (M) des Gehäuses (10) ausgerichteten Schneidkante in die Schälausnehmung (12) hineinragt. Es ist erfindungsgemäß vorgesehen, dass die Klinge (40) in einer Klingenführung reversibel in Richtung der Mittellängsachse (M) des Gehäuses (10) verschiebbar gelagert ist.

## Beschreibung

Die vorliegende Erfindung betrifft ein Schälgerät zum zumindest teilweisen Abtragen der Außenumfangsoberfläche von rotationssymmetrischen Gegenständen, insbesondere zylindrischen Kunststoffrohren, gemäß dem Oberbegriff des Anspruchs 1.

Insbesondere betrifft die vorliegende Erfindung ein Schälgerät zum zumindest teilweisen Abtragen der Außenumfangsoberfläche von rotationssymmetrischen Gegenständen, insbesondere zylindrischen Kunststoffrohren, enthaltend ein glockenförmiges Gehäuse mit einer Mittellängsachse, das eine zur Mittellängsachse koaxial ausgerichtete und an einer Stirnseite des glockenförmigen Gehäuses über eine Zuführöffnung nach außen hin offene Schälausnehmung und eine in dem Gehäuse angeordnete Klinge aufweist, die mit ihrer vorzugsweise parallel zur Mittellängsachse des Gehäuses ausgerichteten Schneidkante in die Schälausnehmung hineinragt.

In der Praxis ist es bekannt, rotationssymmetrische Gegenstände, wie beispielsweise zylindrische Kunststoffrohre, die an ihren Enden miteinander oder mit anderen Formteilen, wie T- oder Kreuzstücke, beispielsweise über Heizwendelfittinge im Wege einer Heizwendelverschweißung verbunden werden sollen, einer speziellen Behandlung zu unterziehen, um eine sichere und/oder fluiddichte Verbindung zu erzielen. In solchen Kunststoffrohren können fluide Medien, wie z.B. Wasser oder Gase transportiert werden. Um ein entsprechendes Transportnetz herzustellen, werden eine Vielzahl von Kunststoffrohren miteinander, z.B. über Muffen, oder mit Formstücken durch Verschweißen oder Verkleben verbunden.

Kunststoffrohre, wie sie für die oben genannten Zwecke eingesetzt werden, haben einen vorgegebenen Nenndurchmesser. Der Durchmesser dieser Rohre weist aber immer eine Toleranz auf, sodass der reale Durchmesser der Rohre größer ist als der Nenndurchmesser. Desweiteren können derartige Rohre an ihren Außenumfangsoberflächen im Bereich ihrer Stirnenden Kratzer oder dergleichen aufweisen oder eine von der zylindrischen Außenkontur abweichende Form. Zur Vorbereitung der Verbindung werden die Rohrenden solcher Kunststoffrohre daher mittels eines Schälgeräts auf den Nenndurchmesser gebracht, indem die oberste Schicht des Rohres am zu verbindenden Rohrende um eine bestimmte Länge entfernt wird. Hierbei wird der Rohrdurchmesser korrigiert und eventuelle oberflächliche Beschädigungen, wie Kratzer oder dergleichen entfernt.

Ein Schälgerät der eingangs genannten Art ist aus dem DE-Gebrauchsmuster 296 12 668 bekannt. Dieses Schälgerät weist einen zylindrischen Schälkörper mit einer zentralen runden Öffnung auf, die zur Längsachse des Schälkörpers ausgerichtet ist. In einer Seitenwand des Schälkörpers ist eine Messeröffnung vorgesehen. In die Messeröffnung wird das Schälmesser eingesetzt und mittels einer Schraube oder Ähnlichem befestigt. Längsrippen auf der Außenseite des Schälkörpers ermöglichen eine gute Handhabung.

Die zu bearbeitenden rotationssymmetrischen Gegenstände, vor allem die zylindrischen Kunststoffrohre bzw. deren Enden, haben aber nicht immer einen kreisrunden Querschnitt. Häufig weisen gerade die Rohrenden transport- oder produktionsbedingt Ovalitäten auf. Werden diese Enden mit den bekannten Schälgeräten bearbeitet, so wird ein unterschiedlich dicker Span von dessen Oberfläche entfernt. Dies kann dazu führen, dass das bearbeitete Rohrende einen Durchmesser aufweist, der vom Nenndurchmesser abweicht, d.h. zu klein oder auch zu groß ist. Weiterhin wird beim Abtragen eines ungleichmäßig dicken Spans eine ungleichmäßige Wandstärke des Rohres erzielt, die bei einer Ovalität des Rohres im Bereich der Auswölbung zu einer unzulässig dünnen Rohrwandung führen kann. In diesen Fällen kann kein optimales Verbinden dieses Rohrendes mit bspw. einem Formstück erfolgen. Undichte Verbindungen können die Folge sein. Ein erneutes Abschälen des dann gekürzten Rohres oder auch ein Reparieren der undichten Schweiß- oder Klebenaht sind notwendig und erfordern zusätzlichen Aufwand.

Es ist daher Aufgabe der vorliegenden Erfindung, ein Schälgerät zur Verfügung zu stellen, das die vorstehend genannten Nachteile überwindet und ein effektives sowie sicheres Verbinden der Rohrenden mit den entsprechenden Formstücken ermöglicht.

Die vorstehende Aufgabe wird durch die Merkmale des Anspruchs 1 gelöst. In den sich daran anschließenden Ansprüchen 2 bis 14 finden sich vorteilhafte Ausgestaltungen hierzu.

Im besonderen wird die vorstehend genannte Aufgabe durch ein Schälgerät zum zumindest teilweisen Abtragen der Außenumfangsoberfläche von rotationssymmetrischen Gegenständen, insbesondere zylindrischen Kunststoffrohren, enthaltend ein glockenförmiges Gehäuse mit einer Mittellängsachse, das eine zur Mittellängsachse koaxial ausgerichtete und an einer Stirnseite des glockenförmigen Gehäuses über eine Zuführöffnung nach außen hin offene Schälausnehmung aufweist. Eine Klinge ist so in dem Gehäuse angeordnete, dass die mit ihrer vorzugsweise parallel zur Mittellängsachse des glockenförmigen Gehäuses ausgerichteten Schneidkante in die Schälausnehmung hineinragt. Erfindungsgemäß ist weiterhin vorgesehen, dass die Klinge in einer Klingenführung reversibel in Richtung der Mittellängsachse des Gehäuses verschiebbar gelagert ist. Durch die Verschiebbarkeit der Klinge kann eine Anpassung an Ovalitäten und Unebenheiten des Rohres erfolgen, wodurch dessen Außenkontur durch die Klinge sehr präzise abgefahren und ein gleichmäßig dicker Span von dem Rohrende abgetragen wird.

In einer bevorzugten Ausführung des erfindungsgemäßen Schälgeräts ist die Klinge in der Klingenführung gegen die Kraft einer Feder reversibel in Richtung der Mittellängsachse des Gehäuses verschiebbar, wodurch eine automatische Anpassung der Klingeneintauchtiefe erfolgt.

In dem Gehäuse des Schälgeräts ist eine Öffnung zum Auswurf der abgeschälten Späne vorgesehen ist. Diese kann mit der Öffnung für die Klinge bzw. die Klingenführung zusammenfallen.

Es kann vorgesehen sein, dass die Klingenführung einstückig mit dem Gehäuse verbunden ist. In dieser Ausführung kann die Klingenführung bereits während des Herstellprozesses für das Gehäuse in dieses eingearbeitet werden.

Die Klingenführung kann aber auch als separates Bauteil gebildet sein. In diesem Fall ist vorgesehen, dass die Klingenführung in der Öffnung des Gehäuses befestigt ist.

Um zu verhindern, dass die Klinge zu weit nach außen aus dem Gehäuse austritt oder verloren geht, kann ein Halter vorgesehen sein zur Sicherung der Klinge in der Klingenführung.

In einer weiterhin bevorzugten Ausführung kann die Klinge mit dem Halter verbunden sein. Entsprechend dieser Ausführung ist es möglich, die Klinge und den Halter aus dem gleichen Material und in einem einzigen Herstellprozess zu fertigen.

In einer weiteren Ausführung des erfindungsgemäßen Schälgeräts kann vorgesehen sein, dass der Halter gegenüber dem Gehäuse reversibel verschiebbar gelagert ist. In einem solchen Fall ist die Klinge, die dann mit dem Halter fest verbunden ist, zusammen mit diesem verschiebbar.

Im Fall eines verschiebbar angeordneten Halters ist vorgesehen, dass ein Federelement zwischen dem Halter und dem Gehäuse angeordnet ist, um ein reversibles Verschieben der Klinge zu ermöglichen.

Gemäß einer weiterhin bevorzugten Ausführung des erfindungsgemäßen Schälgeräts kann vorgesehen sein, dass ein Federelement zwischen dem Halter und der Klinge angeordnet ist. In diesem Fall wird nur die Klinge bewegt, die dann als Einzelteil unabhängig vom Halter ausgetauscht werden kann.

Ein federelastisches Verschieben der Klinge kann aber auch dadurch erreicht werden, dass der Halter federelastische Eigenschaften aufweist. Hierdurch wird ein Bauelement, nämlich eine separate Feder, eingespart, was die Konstruktion des Schälgeräts vereinfacht.

In einer vorteilhaften Ausführung des Schälgeräts ist zur Begrenzung der Eintauchtiefe der Klinge in die Schälausnehmung ein Tiefenanschlag vorgesehen, wodurch die maximale Dicke des abtragbaren Spans und somit den erreichbaren minimalen Rohrdurchmesser begrenzt.

Um eine definierte Länge des Rohrendes zu schälen ist weiterhin in dem Gehäuse des Schälgeräts ein vorzugsweise einstellbarer Tiefenanschlag zur Begrenzung der Einstecktiefe des zu schälenden Gegenstandes vorgesehen. Ist eine Einstellbarkeit des Tiefenanschlags nicht notwendig, kann die Einstecktiefe durch die Bauhöhe des Schälgeräts festgelegt werden.

In einer weiteren Ausführung des erfindungsgemäßen Schälgeräts weist das Gehäuse im Bereich des stirnseitigen Endes, das der Zuführöffnung gegenüber liegt, eine Außenkontur auf, die ein Einspannen des Schälgerätes in ein Spannfutter eines externen Antriebs ermöglicht. Diese Außenkontur kann die Form eines zylindrischen Stifts haben oder auch eine vieleckigen Querschnitt aufweisen. Darüberhinaus kann ein solcher Stift mit einem Gewinde versehen sein, mittels dem er in das entsprechende Ende des Schälgeräts einschraubbar ist, um ihn für den Fall der manuellen Nutzung des Schälgeräts entfernen zu können.

Weitere vorteilhafte Ausgestaltungen sowie ein Ausführungsbeispiel werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1:: eine perspektivische Schemaansicht eines Ausführungsbeispiels des erfindungsgemäßen Schälgeräts;
- Fig. 2:: den Grundkörper des erfindungsgemäßen Schälgeräts, wobei ein Halter und ein Messer demontiert sind; und
- Fig. 3:: Halter und Messer des Ausführungsbeispiels des erfindungsgemäßen Schälgeräts.

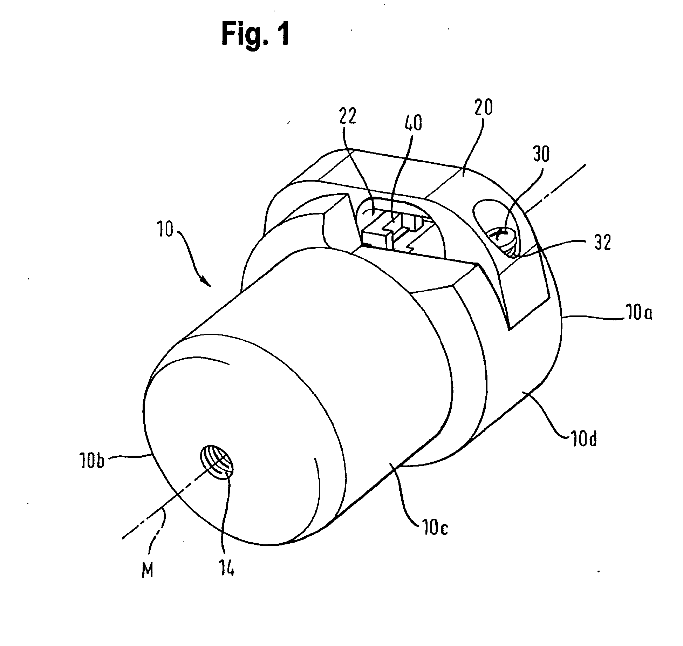

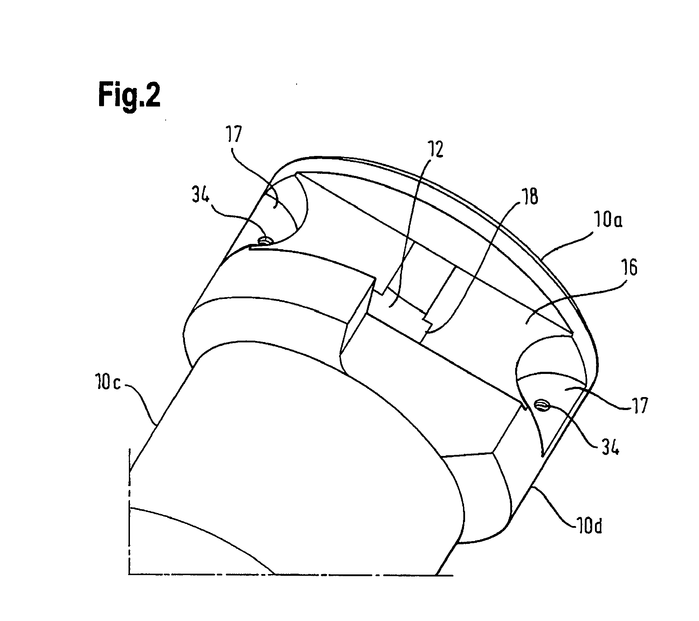

Fig. 1 zeigt eine perspektivische, schematische Ansicht eines Ausführungsbeispiels des erfindungsgemäßen Schälgeräts. Das Schälgerät weist einen annähernd rotationssymmetrisches Gehäuse oder Grundkörper 10 mit einer Mittellängsachse M auf. Der Grundkörper 10 ist glockenförmig gestaltet. Von seiner in Fig. 1 rechten Seite 10a aus ist eine annähernd zylindrische Ausnehmung, die Schälausnehmung 12 (vgl. Fig. 2) eingearbeitet, mit einer an der rechten Seite 10a des Grundkörpers 10 befindlichen Zuführ- bzw. Einstecköffnung für das zu schälende Rohrende. Die Schälausnehmung 12 ist koaxial zur Mittellängsachse M des Grundkörpers 10 ausgerichtet und endet als Sackloch mit ausreichendem Abstand zum entsprechend Fig. 1 linken Ende 10b des Gehäuses oder Grundkörpers 10. In dem linken Ende ist ebenfalls koaxial zur Mittellängsachse M eine Bohrung 14 eingebracht, in der ein nicht näher bezeichnetes Innengewinde eingearbeitet ist.

Der Grundkörper 10 unterteilt sich an seinem Außenumfang in einen linken völlig rotationssymmetrischen Abschnitt 10c sowie einen rechten Abschnitt 10d, der ebenfalls rotationssymmetrisch ist, jedoch eine Montageausnehmung 16 in Form eines annähernd halbkreisförmigen Segments aufweist, in die ein Halter 20 eingesetzt und mittels zweier Schrauben 30 gehalten wird, von denen in Fig. 1 lediglich eine sichtbar ist. Die Schrauben 30 sind parallel zueinander und in einer Ebene senkrecht zur Mittellängsachse M bzw. tangential zur Schälausnehmung 12 ausgerichtet. Der Außendurchmesser des Abschnitts 10d ist größer als der des Abschnitts 10c. Die Innendurchmesser beider Abschnitte 10c, 10d sind, soweit die Schälausnehmung 12 reicht, identisch.

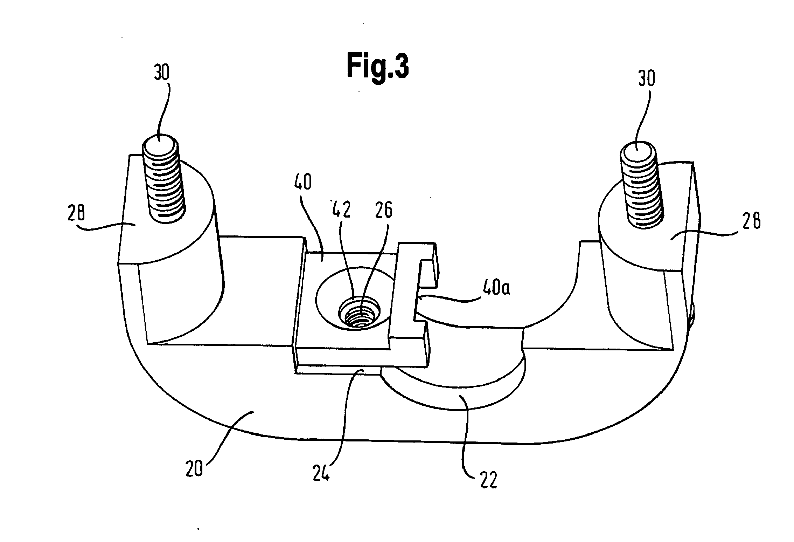

Der Halter 20, der in Fig. 3 gezeigt ist, hat ebenfalls annähernd die Form eines halbkreisförmigen Segments. Seine Breite entspricht der Breite der Montageausnehmung 16, er ist aber im gezeigten Ausführungsbeispiel geringfügig höher, sodass der Halter 20 über den Abschnitt 10d des Grundkörpers 10 hinausragt. Der Halter 20 ist mittels der Schrauben 30, die in entsprechende Gewindebohrungen 34 in dem Gehäuse oder Grundkörper 10 eingreifen, in der Montageausnehmung 16 des Grundkörpers 10 gehalten. Die Schrauben 30 sind jedoch nicht komplett angezogen. Die Unterseite der Schraubenköpfe der Schrauben 30 und die entsprechenden Auflagefläche am Halter 20 sind zueinander beabstandet. Zwischen diesen Flächen ist um den Bolzen der Schrauben 30 eine zylindrische Druckfeder 32 angeordnet. Die Feder 32 stützt sich am Schraubenkopf ab und drückt so den Halter 20 senkrecht zur Mittellängsachse M in die Ausnehmung 16 des Grundkörpers 10.

An seiner Innenseite weist der Halters 20 eine Ausnehmung 24 auf, in der ein Messer 40 angeordnet ist. Das Messer 40 ist dabei so ausgerichtet, dass es mit seiner Schneidkante 40a um eine bestimmte Tiefe in die Schälausnehmung 12 hineinragt. Die Schneidkante 40a des Messers 40 ist zumindest annähernd parallel zur Mittellängsachse M des Gehäuses 10 ausgerichtet. An der Innenseite des Halters 20 ist weiterhin eine Spanausnehmung 22 zur Erleichterung des Spanauswurfs vorgesehen.

In der Schälausnehmung 12 ist (nicht gezeigt) eine umlaufende Kante vorgesehen, die senkrecht zur Mittellängsachse M in die zylindrische Schälausnehmung 12 hineinragt. Diese umlaufende Kante bildet einen Tiefenanschlag zur Begrenzung der Einstecktiefe des Rohres in das Schälgerät. Alternativ hierzu kann die Schälausnehmung 12 eine Durchmesserreduzierung in Form einer Abstufung enthalten, die den gleichen Zweck erfüllt. Im einfachsten Fall ist die Einstecktiefe des Rohres durch die Bauhöhe des Grundkörpers 10 bzw. durch die Tiefe der Schälausnehmung 12 begrenzt. Der Durchmesser der zylindrischen Schälausnehmung 12 entspricht dem Nenndurchmesser des zu bearbeitenden Rohres. Da auch die abzuschälende Länge vom Nenndurchmesser vom Nenndurchmesser des Rohres abhängt, ist die Position der Einstecktiefenbegrenzung hierauf abgestimmt.

Fig. 2 zeigt den Grundkörper 10 des Schälgeräts, wobei hier der Halter 20 entfernt ist. Im mittleren Bereich der Montageausnehmung 16 ist ein Durchbruch 18 zur Schälausnehmung 12 zu sehen, der als Spanauswurföffnung dient. Weiterhin ist am linken Rand des Abschnitts 10d eine Aussparung angebracht, die zu der Spanausnehmung 22 des Halters 20 korrespondiert und die ebenfalls den Spanauswurf erleichtert und eine optische Kontrolle des Messers 40 im eingebauten Zustand erlaubt. An den Enden der durch die Montageausnehmung 16 gebildeten Fläche erstrecken sich senkrecht zu dieser Vertiefungen 17. Diese Vertiefungen 17 haben eine im Wesentlichen zylindrische Form mit einem etwa halbkreisförmigen Querschnitt. Vom Boden der Vertiefungen aus erstrecken sich die Gewindebohrungen 34 in den Grundkörper 10, in welche die Schrauben 30 geschraubt werden. Wehen des begrenzt vorhandenen Materials des Grundkörpers 10 haben die Bohrungen 34, die als Sacklochbohrungen ausgeführt sind, eine vorgegebene Tiefe. Die Schrauben 30 haben eine hieran sowie an die Höhe des Halters 20 angepasste Länge, sodass eine definierte Länge des Schraubenschaftes frei bleibt, um dort die Feder 32 anzuordnen.

Fig. 3 zeigt den Halter 20 mit dem Messer 40, das in einer dafür vorgesehenen Messerauflage 24 liegt. Das Messer 40 wird mittels einer Schraube, die in Fig. 3 nicht dargestellt ist, befestigt. Hierzu weist das Messer 40 eine zentrale Bohrung 42 auf, die bei entsprechender Positionierung des Messers 40 koaxial mit einer Gewindebohrung 26 im Halter 20 ausgerichtet ist. Die Bohrung 42 weist eine Phase auf, sodass eine Senkkopfschraube, mittels der das Messer 40 befestigt wird, bündig mit der Oberfläche des Messers 40 abschließt. Die Ausnehmung 22 im Halter 20 ist so gestaltet, dass die Schneidkante 40a des Messers 40 frei bleibt, d.h. nicht mit dem Halter 20 in Anlage kommt. Weiterhin ist die Ausnehmung 22 nicht symmetrisch. Sie erweitert sich, betrachtet im eingebauten Zustand entsprechend Fig. 1, in Richtung des linken Endes 10b des Gehäuses 10 des Schälgerätes. Hierdurch kann der Spanauswurf in diese Richtung gelenkt werden, wodurch vermieden wird, dass die Späne während des Schälvorgangs in die Einstecköffnung für das zu schälende Rohr, also die Schälausnehmung 12 gelangt und so den Schälprozess negativ beeinflusst.

An den beiden seitlichen Enden des Halters 20 befinden sich zylindrische Fortsätze 28 mit einem annähernd halbkreisförmigen Querschnitt. Sie sind parallel zueinander ausgerichtet und weisen im eingebauten Zustand des Halters 20 in eine Richtung annähernd senkrecht zur Mittellängsachse M. In Ihrem Querschnitt und in ihrer Länge stimmen die Fortsätze 28 mit den Vertiefungen 17 überein, sodass der Halter 20 im montierten Zustand an der durch die Montageausnehmung 16 gebildeten Fläche anliegt. Dabei sind die Fortsätze 28 in den Ausnehmungen 17 geführt. Die Schrauben 30, von denen in Fig. 3 lediglich die Schraubenbolzen zusehen sind, fixieren den Halter 20 in dieser Führung. Die zwischen den Schraubenköpfen und dem Halter 20 vorgesehenen Federn 32 üben eine definierte Kraft auf den Halter 20 aus und drücken diesen so in die Montageausnehmung 16 bzw. auf die durch die Montageausnehmung 16 gebildete Fläche. Der Halter 20 und die hierin eingearbeitete Auflage 24 für das Messer 40 sind so gestaltet, dass die Schneidkante des Messers 40 um eine bestimmte Tiefe in die Schälausnehmung 12 hineinragt.

In Vorbereitung der Verbindung eines beispielsweises PE-Rohres, z.B. durch einen Schweißvorgang, mit einem entsprechenden Formstück, wie z.B. einem Heizwendelfitting, wird das entsprechende Rohrende geschält. Dabei wird auf einer bestimmten Länge, in Abhängigkeit vom Rohrdurchmesser, die obere Schicht des Rohrmaterials abgetragen. Bei dieser abzutragenden Schicht kann es sich ebenfalls um eine metallische Umhüllung handeln, die der Stabilisierung des Rohres dient. Der Durchmesser des unbearbeiteten Rohres liegt über dem Nenndurchmesser, hier üblicherweise ist eine Toleranz von +0,4 mm (2 x 0,2 mm) vorgesehen. Das Schälgerät wird auf das Rohrende aufgesetzt und bspw. von Hand gedreht. Dabei wird das Messer 40 über das Rohrende geführt und schält einen oder mehrere Späne vom Rohrende ab, die durch den Spanauswurf aus dem Schälgerät austreten.

Die Abmessungen des Halters 20 und im besonderen der Auflage 24 für das Messer 40 sind vorliegend so gewählt, dass mit einer einzigen Umdrehung des auf das Rohrende aufgesteckten Schälgeräts ein Span mit einer Dicke von 0,2 mm vom Rohr abgetragen wird. Die Einstecktiefenbegrenzung bewirkt, dass das Rohrende auf der entspechend vorbestimmten Länge abgeschält wird.

Kunststoffrohre und im Besonderen deren Enden können transport- oder herstellungsbedingt Ovalitäten und Abflachungen aufweisen. Bekannte Schälgeräte mit feststehendem Schälmesser tragen bei solchen ovalen Rohrenden einen Span von nicht konstanter Höhe ab. Es wird einerseits zu wenig Material abgetragen, bspw. im Bereich von Abflachungen oder es wird andererseits zu viel Material abgetragen, wie im Bereich der Ausbauchung bei einer Ovalität. Hierdurch stellt sich entweder ein zu großer Durchmesser ein, der ein Einstecken des Rohrendes in das entsprechende Formstück behindert oder eine ordentliche Schweiß- oder Klebenaht wird bei zu geringem Durchmesser durch zu wenig Material verhindert. Bei einem zu großen Rohrdurchmesser besteht zudem die Gefahr, dass das überschüssige Material im Fall einer Verschweißung den Innendurchmesser des Rohres unzulässig verringert. Zudem besteht die Gefahr, dass die Rohrwandung bei Abtrag von zu viel Material zumindest abschnittsweise unzulässig geschwächt wird, wodurch ein zu hoher Wärmeeintrag zum Einfallen der Rohrwandung in diesem Bereich führen kann.

Durch die Federn 32 wirkt das Messer 40 mit einer definierten Kraft auf das Rohr. Im Fall eines Rohrends mit einem kreisrunden Durchmesser wird ein Span konstanter Dicke vom Rohrende abgetragen. Tritt dagegen eine Ovalität des Rohrendes auf, kann das Messer 40 gegen die Kraft der Feder 32 nach außen, d.h. senkrecht zur Mittellängsachse M, ausweichen bzw. im Fall einer Abflachung, dieser wieder nachgeben. Das Messer 40 bleibt dadurch in ständigem Kontakt mit dem Rohrende und kann somit einen gleichmäßigen Abtrag erzielen.

Alternative zu dem am Halter 20 angeschraubten Messer 40 kann diese auch einstückig und aus dem gleichen Material mit dem Halter 20 hergestellt sein, wodurch sich die Zahl der Bauteile für das Schälgerät verringert.

Weiterer Konstruktions- und Teileaufwand kann dadurch reduziert werden, indem dar Halter 20 federelastische Eigenschaften aufweist, die eine Bewegung des Messers 40 erlauben. Zusätzliche Federn 32 wären in diesem Fall nicht notwendig.

Es ist ebenfalls denkbar, nur eine Feder 32 zu verwenden, wenn diese zwischen dem Messer 40 und dem Halter 20 positioniert wird, wobei auch hier eine Schraube so vorzusehen ist, dass ein freier Abschnitt des Schraubenbolzens zur Aufnahme der Feder 32 bereitgestellt wird.

Der Halter 20 kann aber auch in anderer Weise gestaltet werden. So ist es denkbar, eine Seite des Halters drehbar mit dem Grundkörper 10 zu verbinden, bspw. mittels eines Gelenks, und auf der anderen eine Schrauben/Federkombination vorzusehen. Weiterhin kann in der drehbaren Verbindung des Halters mit dem Grundkörper 10 eine Drehfeder vorgesehen sein.

Weiterhin kann im Halter 20 oder im Grundkörper 10 eine Linearführung für das Messer 40 vorgesehen sein, in der es verschiebbar gehalten ist. Eine Abdeckung, die ein Federelement beinhaltet oder zwischen sich und dem Messer fixiert sichert das Messer vor dem Herausrutschen bzw. drückt es mit einer bestimmten Kraft in Richtung der Mittellängsachse M.

Unabhängig von der Gestaltung der federelastischen Lagerung des Messers kann die Kraft, mit der das Messer durch die Feder belastet wird durch die Wahl einer geeigneten Federkennlinie gewählt werden. Hierdurch kann auch eine Anpassung des Schälgeräts an unterschiedlich harte Rohrmaterialien erfolgen.

In die am in Fig. 1 linken Ende des Schälgeräts vorgesehene Gewindebohrung 14 kann ein Bolzen eingeschraubt werden, um das Schälgerät bspw. in ein Spannfutter einer Bohrmaschine oder einer anderen Antriebseinheit einzuspannen, um eine maschinelle Verwendung des Schälgeräts zu ermöglichen. Ein solcher Bolzen oder auch jedes andere geeignete Element kann selbstverständlich bereits beider Herstellung des Gehäuses 10 einstückig an dieses angeformt sein, beispielsweise während eines Gieß-, Dreh- oder Gräsvorgangs.

Aufgrund des verschiebbar gelagerten Messers 40 und dem daraus resultierenden gleichmäßigen Materialabtrag ist in dem Schälgerät keine Zentriervorrichtung notwendig. Hierdurch ist es Möglich, nicht zentrierbare Rohrenden zu bearbeiten, in denen eine Vorrichtung untergebracht ist, wie ein Gas-Stop-Ventil oder Ähnliches. Ungeachtet dessen kann eine Zentrierung aber vorgesehen bzw. einfach nachgerüstet werden, indem z.B. ein Zentrierstift in die Gewindebohrung 14 eingeschraubt wird.

Die Gewindebohrung 14 kann aber auch dazu verwendet werden, eine Innenzentrierung aufzunehmen, die eine Gewindespindel enthält. Diese kann in einem entsprechenden Gegenstück im Inneren des Rohrendes geführt sein. Hieraus ergibt sich ein geführter Vorlauf bzw. Vorschub, der der Gewindesteigung und der Anzahl der Umdrehungen entspricht, wodurch sich der Vorschub besonders bei maschineller Bearbeitung sehr gut steuern lässt. Ein Tiefenanschlag wäre in diesem Fall nicht notwendig.

## Patentansprüche

1. Schälgerät zum zumindest teilweisen Abtragen der Außenumfangsoberfläche von rotationssymmetrischen Gegenständen, insbesondere zylindrischen Kunststoffrohren, enthaltend ein glockenförmiges Gehäuse (10) mit einer Mittellängsachse (M), das eine zur Mittellängsachse (M) koaxial ausgerichtete und an einer Stirnseite () des glockenförmigen Gehäuses (10) über eine Zuführöffnung () nach außen hin offene Schälausnehmung (12) aufweist und eine in dem Gehäuse (10) angeordnete Klinge (40), die mit ihrer vorzugsweise parallel zur Mittellängsachse (M) des Gehäuses (10) ausgerichteten Schneidkante (40b) in die Schälausnehmung (12) hineinragt,
**dadurch gekennzeichnet, dass** die Klinge (40) in einer Klingenführung reversibel in Richtung der Mittellängsachse (M) des Gehäuses (10) verschiebbar gelagert ist.

2. Schälgerät nach Anspruch 1,
**dadurch gekennzeichnet, dass** die Klinge (40) in der Klingenführung gegen die Kraft einer Feder (32) reversibel in Richtung der Mittellängsachse (M) des Gehäuses (10) verschiebbar ist.

3. Schälgerät nach einem der Ansprüche 1 oder 2,
**dadurch gekennzeichnet, dass** in dem Gehäuse (10) eine Öffnung (16, 18) zum Auswurf der abgeschälten Späne vorgesehen ist.

4. Schälgerät nach einem der Ansprüche 1 bis 3,
**dadurch gekennzeichnet, dass** die Klingenführung einstückig mit dem Gehäuse (10) verbunden ist.

5. Schälgerät nach Anspruch 3 oder 4,
**dadurch gekennzeichnet, dass** die Klingenführung in der Öffnung (16, 18) des Gehäuses befestigt ist.

6. Schälgerät nach einem der Ansprüche 1 bis 5,
**dadurch gekennzeichnet, dass** ein Halter (20) vorgesehen ist zur Sicherung der Klinge (40) in der Klingenführung.

7. Schälgerät nach Anspruch 6,
**dadurch gekennzeichnet, dass** die Klinge (40) mit dem Halter (20) verbunden ist.

8. Schälgerät nach Anspruch 6 oder 7,
**dadurch gekennzeichnet, dass** der Halter (20) gegenüber dem Gehäuse (10) reversibel verschiebbar gelagert ist.

9. Schälgerät nach einem der Ansprüche 6 bis 8,
**dadurch gekennzeichnet, dass** ein Federelement (32) zwischen dem Halter (20) und dem Gehäuse (10) angeordnet ist.

10. Schälgerät nach einem der Ansprüche 6 bis 9,
**dadurch gekennzeichnet, dass** ein Federelement (32) zwischen dem Halter (20) und der Klinge (40) angeordnet ist.

11. Schälgerät nach einem der Ansprüche 6 bis 10,
**dadurch gekennzeichnet, dass** der Halter (20) federelastische Eigenschaften aufweist.

12. Schälgerät nach einem der Ansprüche 1 bis 11,
**dadurch gekennzeichnet, dass** ein Tiefenanschlag vorgesehen ist, zur Begrenzung der Eintauchtiefe der Klinge (20) in die Schälausnehmung (12).

13. Schälgerät nach einem der Ansprüche 1 bis 12,
**dadurch gekennzeichnet, dass** in dem Gehäuse (10) ein Tiefenanschlag vorgesehen ist zur Begrenzung der Einstecktiefe des zu schälenden Gegenstandes.

14. Schälgerät nach einem der Ansprüche 1 bis 13,
**dadurch gekennzeichnet, dass** das Gehäuse (10) im Bereich des Stirnseitigen Endes (10b), das der Zuführöffnung der Schälausnehmung (12) gegenüberliegt, eine Außenkontur aufweist, die ein Einspannen des Schälgerätes in ein Spannfutter eines externen Antriebs ermöglicht.
